# EUROPÄISCHE PATENTANMELDUNG

(11) **EP 4 737 715 A1**
(43) Veröffentlichungstag der Anmeldung: **06.05.2026**
(21) Anmeldenummer: 25206767.3
(22) Anmeldetag: 06.10.2025
(51) Int. Cl.: F03D 15/00

(54) **LAGERANORDNUNG FÜR EINE WINDKRAFTANLAGE**

(30) Priorität: 30.10.2024 DE 102024210472
(71) Anmelder: ZF Friedrichshafen AG, 88046 Friedrichshafen (DE); ZF Wind Power Antwerpen NV, 3920 Lommel (BE)
(72) Erfinder: Klein-Hitpass, Arno, 52074 Aachen (DE)
(74) Vertreter: ZF Friedrichshafen AG

(57) **Zusammenfassung**

Die Erfindung betrifft eine Lageranordnung für eine Windkraftanlage (1) zum Lagern eines Triebstrangs (10) an einem Turm (2) der Windkraftanlage (1). Die Lageranordnung umfasst eine Grundplatte (20), welche an dem Turm (2) anbringbar ist.

Die Lageranordnung umfasst ferner ein Lagergehäuse (22) zum Aufnehmen und Lagern des Triebstrangs (10) sowie eine Koppeleinrichtung (24). Die Koppeleinrichtung (24) weist ein Koppelelement (26) zum Umwandeln eines Torsionsmoments (80) um eine Torsionsmomentachse (70), welches von dem Triebstrang (10) auf das Lagergehäuse aufgebracht wird, in eine in einer Stützrichtung (72) wirkende Stützkraft (82) auf. Die Koppeleinrichtung (24) weist ferner ein Lagerelement (28) zum Einleiten der Stützkraft (82) von dem Koppelelement (26) in die Grundplatte auf. Die Koppeleinrichtung (24) ist dazu ausgebildet, Verschiebungen des Lagergehäuses in einer Querrichtung (74), welche senkrecht zu der Torsionsmomentachse (70) und der Stützrichtung (72) ist, relativ zu der Grundplatte zuzulassen. Die Erfindung betrifft auch eine Windkraftanlage.

## Beschreibung

### Technisches Gebiet

Die vorliegende Offenbarung bezieht sich auf eine Lageranordnung für eine Windkraftanlage. Die vorliegende Offenbarung bezieht sich ferner auf eine Windkraftanlage mit einer Lageranordnung.

### Stand der Technik

Windkraftanlagen sind bekannt, welche dazu dienen, aus Windenergie durch Umwandlung Elektrizität zu erzeugen. Zur Umwandlung ist in derartigen Anlagen ein Rotor vorgesehen, welcher dazu ausgebildet ist, Windenergie in eine mechanische Leistung, beispielsweise in eine Rotation mit einem Drehmoment, umzuwandeln. Das so erzeugte Drehmoment kann in einen Triebstrang eingeleitet werden, um in elektrische Leistung umgewandelt zu werden, beispielsweise durch einen Generator. In Anbetracht der hohen Gewichte und Kräfte, die beispielsweise bei großen Windkraftanlagen mit einer Leistung von mehreren Megawatt auftreten, werden hinsichtlich Belastbarkeit und Schwingungsverhalten hohe Anforderungen an die Lagerung des Triebstrangs gestellt.

### Darstellung der Erfindung

Ein erster Aspekt der vorliegenden Offenbarung betrifft eine Lageranordnung für eine Windkraftanlage zum Lagern eines Triebstrangs an einem Turm der Windkraftanlage. Die Windkraftanlage kann einen Rotor aufweisen. Der Rotor kann dazu ausgebildet sein, eine Windenergie in eine rotatorische mechanische Energie umzuwandeln und diese in den Triebstrang einzuleiten. Die Windkraftanlage kann einen Turm sowie eine Gondel aufweisen, welche zumindest Teile des Triebstrangs aufnimmt und lagert. Die Gondel kann an einem oberen Ende des Turms angebracht sein. Die Gondel kann drehbar an dem Turm angebracht sein. Die Gondel kann um eine vertikale Gierachse drehbar sein, um eine Gierbewegung der Gondel relativ zu dem Turm auszuführen. Die Windkraftanlage kann ein Gierlager zum Bereitstellen der Gierbewegung aufweisen. Die Gierbewegung kann dazu dienen, die Gondel beziehungsweise den Triebstrang in einer horizontalen Ebene relativ zu dem Wind auszurichten, beispielsweise um einen gewünschten Anstellwinkel zu der Windrichtung zu bewirken. Ein unteres Ende des Turms kann an einem Boden verankert sein. Alternativ kann das untere Ende des Turms an einer Offshore-Windanlagenplattform angebracht sein.

Der Triebstrang kann einen Generator aufweisen, um Windenergie in elektrische Energie umzuwandeln. Der Rotor kann beispielsweise über eine Rotorwelle des Triebstrangs mit dem Generator verbunden sein. Der Rotor kann mehrere Rotorblätter, beispielsweise drei Rotorblätter, aufweisen. Der Triebstrang kann eine Nabe aufweisen, über welche der Rotor an der Rotorwelle gekoppelt ist. Die Nabe kann dazu ausgebildet sein, einen Anstellwinkel der Rotorblätter zu verstellen. Der Triebstrang kann ein Getriebe aufweisen, welches in einem Drehmomentfluss zwischen dem Rotor und dem Generator angeordnet ist. Der Generator kann dazu ausgebildet sein, die Rotation der Rotorwelle oder die Rotation eines Abtriebs des Getriebes für Stromerzeugung zu nutzen. Das Getriebe kann dazu ausgebildet sein, eine Drehzahl der Rotorwelle in eine andere, beispielsweise höhere, Drehzahl zum Antreiben des Generators zu überführen. Die Drehzahl der Rotorwelle kann im Betrieb zum Beispiel zwischen 2 U/min und 30 U/min, beispielsweise zwischen 5 U/min und 20 U/min, betragen. Die Drehzahl zum Antreiben des Generators kann im Betrieb zum Beispiel zwischen 500 U/min und 3000 U/min, beispielsweise zwischen 900 U/min und 2000 U/min, betragen. Ein Antrieb des Getriebes kann mit dem Rotor mechanisch wirkverbunden sein und der Abtrieb des Getriebes kann beispielsweise mit dem Generator mechanisch wirkverbunden sein. Das Getriebe kann dazu ausgebildet sein, ein Drehmoment von der Rotorwelle an den Generator zu übertragen. Das Drehmoment an dem Antrieb des Getriebes kann im Betrieb zum Beispiel zwischen 500.000 Nm und 15.000.000 Nm, beispielsweise zwischen 3.000.000 Nm und 10.000.000 Nm, betragen. Der Triebstrang kann ferner Hilfsaggregate aufweisen. Die Hilfsaggregate können dazu ausgebildet sein, Parameter des restlichen Triebstrangs und physikalische Größen der Windkraftanlage zu beeinflussen. Die Hilfsaggregate können beispielsweise ein Heizsystem, ein Kühlsystem, ein Ausrichtsystem für die Gondel, ein Verstellsystem für die Nabe und/oder Wandlersysteme, beispielsweise Wechselrichter, für die erzeugte elektrische Energie umfassen.

Die Lageranordnung kann dazu ausgebildet sein, mindestens manche kinematische Freiheitsgrade des Triebstrangs abzustützen. Die kinematischen Freiheitsgrade können drei Verschiebungen und drei Rotationen umfassen. Die Lageranordnung kann dazu ausgebildet sein, einen, mehrere oder alle Freiheitsgrade des Triebstrangs oder von Teilen davon abzustützen. Je nach Ausgestaltung der Lageranordnung kann eine weitere Lageranordnung vorgesehen sein, welche freibleibende Freiheitsgrade sperrt und/oder Teile des Triebstrangs, die nicht durch die Lageranordnung gelagert sind, lagert. Grundsätzlich kann es zum Betrieb der Windkraftanlage erforderlich sein, fünf der sechs Freiheitsgrade der Rotorwelle festzuhalten. Ein rotatorischer Freiheitsgrad der Rotorwelle kann im Betrieb frei bleiben, um eine Rotation der Rotorwelle und ein damit einhergehendes Einleiten von Drehmoment zur Energieerzeugung zu ermöglichen. Die Rotation der Rotorwelle kann ein Reaktionsmoment in dem Generator bewirken. Das Reaktionsmoment in dem Generator kann durch die Lageranordnung abgestützt werden. Der Triebstrang kann auch eine Bremseinrichtung aufweisen, welche die Rotation der Rotorwelle abbremsen kann, beispielsweise bei zu starkem Wind oder für Wartungsarbeiten.

Die Lageranordnung weist eine Grundplatte auf, welche an dem Turm anbringbar ist. Die Grundplatte kann drehbar an dem Turm gelagert sein, beispielsweise unmittelbar an dem Turm oder mittelbar über ein Gierlager. Die Grundplatte kann dazu ausgebildet sein, Anbindungspunkte für die Lageranordnung zur Krafteinleitung und/oder Momenteneinleitung bereitzustellen. Die Anbindungspunkte können starre Verbindungen und/oder gelenkige Verbindungen umfassen. Die Grundplatte kann beispielsweise als ein zumindest teilweise ringförmiges Element ausgebildet sein. Die Grundplatte kann auch als ein Schalenbauteil ausgebildet sein.

Die Lageranordnung weist ein Lagergehäuse zum Aufnehmen und Lagern des Triebstrangs auf. Das Lagergehäuse kann dazu ausgebildet sein, den gesamten Triebstrang oder auch nur Teile davon aufzunehmen und zu lagern. Beispielsweise kann das Lagergehäuse nur das Getriebe, nur den Generator oder sowohl das Getriebe als auch den Generator abstützen. Das Lagergehäuse kann auch dazu ausgebildet sein, rotierbare Elemente abzustützen. Die rotierbaren Elemente können beispielsweise die Rotorwelle oder Getriebeelemente wie Zahnräder aufweisen. Die in dem Lagergehäuse aufgenommenen und gelagerten Teile und/oder rotierbaren Elemente können Kräfte und/oder Momente in das Lagergehäuse einleiten.

Die Lageranordnung weist ferner eine Koppeleinrichtung auf. Die Koppeleinrichtung weist ein Koppelelement zum Umwandeln eines Torsionsmoments um eine Torsionsmomentachse, welches von dem Triebstrang auf das Lagergehäuse aufgebracht wird, in eine in einer Stützrichtung wirkende Stützkraft auf. Das Torsionsmoment kann beispielsweise ein Reaktionsmoment des Generators und/oder des Getriebes auf ein Antriebsmoment der Rotorwelle sein. Das Torsionsmoment kann auch Anteile in anderen Richtungen als eine Rotationsrichtung der Rotorwelle umfassen. Die Stützkraft kann eine Wirklinie aufweisen, die in der Stützrichtung verläuft. Das Koppelelement kann dazu ausgebildet sein, mithilfe einer geometrischen Anordnung, die einen Hebelarm zwischen der Torsionsmomentachse und der Wirklinie der Stützkraft ausbildet, das Torsionsmoment um die Torsionsmomentachse in die Stützkraft umzuwandeln, welche in der Stützrichtung wirkt. Die Stützrichtung kann eine Richtung sein, welche senkrecht zu der Torsionsmomentachse verläuft. Die Stützrichtung kann auch Komponenten aufweisen, die nicht senkrecht zu der Torsionsmomentachse verlaufen. Im Falle einer Windkraftanlage in Horizontalbauweise, bei welcher die Rotorwelle im Wesentlichen horizontal verläuft, kann beispielsweise die Stützrichtung im Wesentlichen vertikal mit Bezug auf den Boden verlaufen. Im Falle einer Windkraftanlage in Vertikalbauweise, bei welcher die Rotorwelle im Wesentlichen vertikal verläuft, kann die Stützrichtung beispielsweise im Wesentlichen horizontal, das heißt parallel zum Boden, verlaufen.

Die Lageranordnung kann dazu ausgebildet sein, mithilfe des Koppelelements mindestens das Torsionsmoment der Rotorwelle über die Grundplatte an den Turm abzustützen. Die Windkraftanlage kann mit einer weiteren Lageranordnung versehen sein, welche die Rotorwelle zusätzlich an den Turm abstützt. Die weitere Lageranordnung kann beispielsweise radiale Kräfte der Rotorwelle aufnehmen. Die weitere Lageranordnung kann beispielsweise ein Rotorwellenhauptlager aufweisen, welches nahe an einem rotorseitigen Ende der Rotorwelle angeordnet ist. Das Rotorwellenhauptlager kann dazu ausgebildet sein, radiale Kräfte aufzunehmen. Das Rotorwellenhauptlager kann auch dazu ausgebildet sein, axiale Kräfte der Rotorwelle aufzunehmen. Das Rotorwellenhauptlager kann auch an der Grundplatte befestigt sein oder damit einstückig ausgebildet sein.

Das Koppelelement kann als eine Drehmomentstütze ausgebildet sein, welche das Torsionsmoment beabstandet von der Torsionsmomentachse mit der Grundplatte verbindet. Das Koppelelement kann dazu ausgebildet sein, durch ein Einleiten der Stützkraft in die Grundplatte das Torsionsmoment an der Grundplatte abzustützen. Das Koppelelement kann auch dazu ausgebildet sein, sonstige Kräfte, die nicht durch das Torsionsmoment erzeugt werden, in die Grundplatte einzuleiten. Beispielsweise kann das Koppelelement dazu ausgebildet sein, eine auf das Lagergehäuse wirkende Gewichtskraft in die Grundplatte einzuleiten. Wird eine Kraft oder ein Moment eingeleitet, bedeutet dies, dass ein mit der Kraft beziehungsweise dem Moment zusammenhängender Freiheitsgrad gesperrt wird. Folglich bedeutet das Einleiten einer Kraft in eine Richtung, dass eine Verschiebung in der Richtung gehemmt oder im Wesentlichen unterbunden wird. Gleichermaßen bedeutet das Einleiten eines Moments, dass eine Rotation um die Momentachse gehemmt oder im Wesentlichen unterbunden wird.

Das Koppelelement kann an dem Lagergehäuse befestigt sein. Das Koppelelement kann auch einstückig mit dem Lagergehäuse ausgebildet sein. Das Koppelelement kann an der Grundplatte befestigt sein. Das Koppelelement kann lagergehäuseseitig und/oder grundplattenseitig starr oder beweglich befestigt sein. Beispielsweise kann das Koppelelement lagergehäuseseitig und/oder grundplattenseitig über ein Drehgelenk befestigt sein. Als ein Beispiel kann das Koppelelement als ein Stablenker ausgebildet sein oder einen Stablenker aufweisen. Als ein weiteres Beispiel kann das Koppelelement als ein Dreieckslenker ausgebildet sein oder einen Dreieckslenker aufweisen. Der Aufbau eines Stablenkers und eines Dreieckslenkers werden später ausführlich beschrieben.

Die Koppeleinrichtung weist ferner ein Lagerelement zum Einleiten der Stützkraft von dem Koppelelement in die Grundplatte auf. Das Lagerelement kann dazu ausgebildet sein, das Koppelelement mit der Grundplatte zu verbinden. Das Lagerelement kann dazu ausgebildet sein, bestimmte kinematische Freiheitsgrade zwischen Koppelelement und Grundplatte zu sperren. Das Koppelelement kann beispielsweise als ein Gleitlager ausgebildet sein. Das Gleitlager kann beispielsweise ein ebenes Gleitlager sein, welches Verschiebungen normal zu der Stützrichtung zulässt, jedoch Verschiebungen in der Stützrichtung einseitig oder beidseitig sperrt. Alternativ oder zusätzlich kann das Lagerelement einen kinematischen Mechanismus aufweisen, um eine Relativbewegung zwischen dem Koppelelement und der Grundplatte mit mindestens einem Freiheitsgrad zu führen. Das Lagerelement kann gedämpft oder ungedämpft sein. Ein gedämpftes Lagerelement kann einer aufgebrachten Kraft entgegenwirken und damit einen Widerstand gegen die mit der Kraft einhergehende Verschiebung bewirken. Ein ungedämpftes Lagerelement kann eine Verschiebung durch die aufgebrachte Kraft im Wesentlichen widerstandsfrei bewirken.

Die Koppeleinrichtung ist ausgebildet, Verschiebungen des Lagergehäuses in einer Querrichtung, welche senkrecht zu der Torsionsmomentachse und der Stützrichtung ist, relativ zu der Grundplatte zuzulassen. Die Verschiebungen des Lagergehäuses in der Querrichtung relativ zu der Grundplatte können durch das Lagerelement, durch das Koppelelement oder durch eine Kombination der beiden zugelassen werden. Beispielsweise kann das Lagerelement derart ausgebildet sein, dass es eine Verschiebung in der Querrichtung des Koppelelements relativ zu der Grundplatte ermöglicht. Beispielsweise kann das Koppelelement dazu ausgebildet sein, seine Geometrie zu ändern, beispielsweise sich zu verformen, um die Relativbewegung des Lagergehäuses relativ zu der Grundplatte zuzulassen.

Mit der Lageranordnung gemäß dem ersten Aspekt wird eine Lageranordnung bereitgestellt, welche die Krafteinleitung in die Grundplatte in der Querrichtung von den Krafteinleitungen in anderen Richtungen sowie von der Einleitung des Torsionsmoments entkoppelt. Grundsätzlich können Komponenten des Triebstrangs, welche mit dem Rotor und dem Turm wirkverbunden sind, beispielsweise das Getriebe, eine Schwingungsanregung für den Rotor und/oder den Turm darstellen und Betriebsschwingungen erzeugen. Die Schwingungsanregung tritt beispielsweise in radialen Richtungen der Rotorwelle auf. Die radialen Richtungen weisen in bestimmten Fällen Komponenten in der Stützrichtung und in der Querrichtung auf. In Anbetracht der hohen Gewichte des Triebstrangs führt diese Schwingungsanregung zu erheblichen Kräften, die in den Rotor und den Turm eingeleitet werden. Dabei können der Rotor, beispielsweise die Rotorblätter, und/oder der Turm als Resonanzkörper dienen und die Schwingungen weiter verstärken. Durch die Entkopplung der Krafteinleitung in der Querrichtung gemäß dem ersten Aspekt wird auch die Schwingungsanregung in der Querrichtung entkoppelt. Da die Komponenten der Schwingungsanregung in der Stützrichtung von den Komponenten der Schwingungsanregung in der Querrichtung entkoppelt sind, führt die Lageranordnung des ersten Aspekts zu einer deutlichen Reduktion der auf die Grundplatte wirkenden Schwingungsanregungen. Selbst wenn die Querkräfte über weitere Elemente der Lageranordnung oder einer weiteren Lageranordnung in die Grundplatte eingeleitet werden, kann dies räumlich getrennt erfolgen, so dass sich Schwingungsmodi nicht oder nur in geringem Maße gegenseitig verstärken. Demzufolge stellt der erste Aspekt eine Lageranordnung für eine Windkraftanlage bereit, welche Betriebsschwingungen mit einem einfachen Aufbau minimiert.

In einer Ausführungsform ist das Lagerelement als ein Gleitelement zum Ermöglichen von Verschiebungen des Lagergehäuses in der Querrichtung relativ zu der Grundplatte ausgebildet. Das als Gleitelement ausgebildete Lagerelement kann beispielsweise zwei ebene Gleitflächen aufweisen, welche relativ zueinander mit einer Komponente in der Querrichtung gleiten können. Das Lagerelement kann dazu ausgebildet sein, Verschiebungen des Lagergehäuses nur in der Querrichtung zuzulassen. Das Lagerelement kann auch dazu ausgebildet sein, Verschiebungen in einer Richtung parallel zu der Torsionsmomentachse zuzulassen. Das Lagerelement kann die jeweiligen Verschiebungen gedämpft oder ungedämpft zulassen. Durch das als Gleitelement ausgebildete Lagerelement wird ein einfacher Aufbau bereitgestellt.

In einer Ausführungsform weist die Lageranordnung zwei Koppeleinrichtungen auf. Die zwei Koppeleinrichtungen sind auf gegenüberliegenden Seiten der Torsionsmomentachse angeordnet. Dadurch kann die Krafteinleitung in die Grundplatte weiter aufgeteilt werden. Beispielsweise können die Koppeleinrichtungen dazu ausgebildet sein, dass sie Stützkräfte nur einseitig, das heißt in nur einer Richtung, einleiten. Da die Koppeleinrichtungen auf gegenüberliegenden Seiten der Torsionsmomentachse angeordnet sind, kann jede Koppeleinrichtung auf diese Weise das Torsionsmoment in nur einer Torsionsmomentrichtung abstützen. Somit werden auch Schwingungen um die Torsionsmomentachse nur einseitig eingeleitet, wodurch die Schwingungsanregungen insgesamt gesenkt werden können. In einer weiteren Ausführungsform können die Koppelelemente derart ausgebildet sein, dass sie Stützkräfte beidseitig einleiten. Dadurch können die Koppelelemente kleiner dimensioniert werden, da jedes Koppelelement nur die Hälfte des Torsionsmoments abstützen muss.

In einer Ausführungsform weist die Lageranordnung ein weiteres Koppelelement zum Übertragen von Kräften in der Querrichtung von dem Lagergehäuse auf die Grundplatte auf. Das weitere Koppelelement kann auf gleiche Weise wie das Koppelelement ausgebildet sein oder davon verschieden sein. Das weitere Koppelelement kann dazu ausgebildet sein, Kräfte in der Querrichtung an einem anderen Anbindungspunkt an der Grundplatte einzuleiten als das Koppelelement. Das weitere Koppelelement kann dazu ausgebildet sein, Verschiebungen in der Querrichtung zu unterbinden oder zu dämpfen. Das weitere Koppelelement kann entlang der Torsionsmomentachse auf derselben Höhe angeordnet sein wie das Lagerelement des Koppelelements. Alternativ kann das weitere Koppelelement entlang der Torsionsmomentachse auf einer anderen Höhe angeordnet sein als die Lagerelemente.

In einer Ausführungsform ist das Lagerelement dazu ausgebildet, Kräfte in Richtung der Torsionsmomentachse aufzunehmen. Dadurch kann die Koppeleinrichtung auch Kräfte in Richtung der Torsionsmomentachse in die Grundplatte einleiten. Die Kräfte in Richtung der Torsionsmomentachse können zumindest Anteile in Axialrichtung der Rotationsachse aufweisen, sodass diese Anteile abgestützt werden. Falls das Lagerelement einen Hebelarm mit Bezug auf die Gierachse aufweist, ist es zudem möglich, auch ein Giermoment um die Gierachse abzustützen.

In einer Ausführungsform ist die Grundplatte um eine Gierachse drehbar an dem Turm gelagert. Das Lagerelement ist dazu ausgebildet, Verschiebungen in einer umfänglichen Richtung um die Gierachse zuzulassen. Die Lageranordnung weist ein weiteres Koppelelement zum Umwandeln eines Giermoments um die Gierachse an dem Lagergehäuse in eine Kraft in der Querrichtung auf. Das weitere Koppelelement zum Umwandeln des Giermoments ist dazu ausgebildet, die Kraft in der Querrichtung in die Grundplatte einzuleiten. Das weitere Koppelelement zum Umwandeln des Giermoments kann auf gleiche Weise wie das Koppelelement ausgebildet sein oder davon verschieden sein. Das weitere Koppelelement zum Umwandeln des Giermoments kann das weitere Koppelelement zum Übertragen von Kräften in der Querrichtung sein oder davon verschieden sein. Die Lageranordnung kann mehrere weitere Koppelelemente aufweisen.

In einer Ausführungsform weist eines der Koppelelemente einen Stablenker auf. Der Stablenker ist ausgebildet, Zug- und Druckkräfte zu übertragen. Der Stablenker ist an seinen zwei Enden drehbar gelagert. Das einen Stablenker aufweisende Koppelelement kann eines, mehrere oder alle der Koppelelemente und/oder der weiteren Koppelelemente sein. Der Stablenker kann dazu ausgebildet sein, eine kinematische Kopplung zwischen seinen zwei Enden bereitzustellen. Der Stablenker kann in einer Längsrichtung zwischen seinen Enden eine größere Steifigkeit aufweisen als quer zu der Längsrichtung. Der Stablenker kann dazu ausgebildet sein, Zug- und Druckkräfte in der Längsrichtung zu übertragen. Die Enden des Stablenkers können über ein drehbares Gelenk drehbar gelagert sein. Beispiele für drehbare Gelenke umfassen ein Drehgelenk mit einem rotatorischen Freiheitsgrad, ein Kreuz- oder Gleichlaufgelenk mit zwei rotatorischen Freiheitsgraden sowie ein Kugelgelenk mit drei rotatorischen Freiheitsgraden. Durch die Verwendung eines Stablenkers wird eine besonders einfache Führung und Krafteinleitung bereitgestellt. Durch die Verwendung von drehbaren Gelenken an den Enden des Stablenkers werden unerwünschte Kopplungen zu anderen Freiheitsgraden als die Verschiebung in der Längsrichtung des Stablenkers vermieden.

Der Stablenker kann aus einem metallischen oder nicht-metallischen Werkstoff hergestellt sein. Der Stablenker kann passive oder aktive Dämpfungsmittel aufweisen. Der Stablenker kann dazu ausgebildet sein, eine Längenänderung des Stablenkers zuzulassen. Die Längenänderungen kann durch eine Verformung des Stablenkers erfolgen. Alternativ oder zusätzlich kann die Längenänderung durch eine relative Verschiebung von zwei Teilen des Stablenkers erfolgen. Die Längenänderung kann beispielsweise dazu dienen, eine Verschiebung des Lagergehäuses in der Querrichtung zu ermöglichen. Der Stablenker kann als ein Aktuator für eine aktive Längenänderung ausgebildet sein. Durch eine aktive Längenänderung eines Stablenkers kann eine gewünschte Änderung einer Position herbeigeführt werden. Wenn beispielsweise ein weiteres Koppelelement, welches ein Giermoment abstützt, einen als Aktuator ausgebildeten Stablenker aufweist, kann die Längenänderung des als Aktuator ausgebildeten Stablenkers dazu genutzt werden, eine Gierbewegung zu bewirken.

In einer Ausführungsform ist eines der Koppelelemente als ein Dreieckslenker ausgebildet. Das als Dreieckslenker ausgebildete Koppelelement kann eines, mehrere oder alle der Koppelelemente und/oder der weiteren Koppelelemente sein. Der Dreieckslenker kann dazu ausgebildet sein, eine kinematische Kopplung zwischen drei Anbindungspunkten bereitzustellen. Der Dreieckslenker kann beispielsweise L-förmig oder dreieckig sein. Der Dreieckslenker kann starre Elemente und/oder gelenkig gelagerte Elemente, beispielsweise Stablenker wie vorstehend beschrieben, zur kinematischen Kopplung zwischen den Anbindungspunkten aufweisen. Der Dreieckslenker kann in Form eines Dreiecks ausgebildet sein. Zwei Schenkel des Dreiecks können als Kraftübertragungselemente, beispielsweise als Stablenker ausgebildet sein. Die Schenkel können an einem Winkelmittelpunkt zusammenlaufen und zueinander angewinkelt sein. Das Dreieck kann als einen dritten Schenkel einen Teil eines Bauteils, welches die von dem Winkelmittelpunkt distalen Enden der Schenkel verbindet, umfassen. Beispiele für ein solches die Enden verbindende Bauteil können Teile des Lagergehäuses, der Grundplatte und/oder eines später beschriebenen Hilfsrahmens umfassen. Als ein Beispiel für einen Dreieckslenker können zwei längliche Bauteile, beispielsweise drehbar oder fest gelagerte Stablenker, auf unterschiedlichen Höhen des Lagergehäuses an diesem befestigt sein und zu dem Lagerelement hin aufeinander zulaufen, sodass ein Teil des Lagergehäuses mit den länglichen Bauteilen ein Dreieck bildet. Als ein weiteres Beispiel können zwei Stablenker ausgehend von dem Lagergehäuse zu jeweils einem Lagerelement auseinanderlaufen, wobei zwei Lagerelemente auf unterschiedliche Höhen bereitgestellt sind, sodass ein Dreieck mit den Stablenkern und einem Verbindungsbauteil zwischen den zwei Lagerelementen ausgebildet wird.

In einer Ausführungsform weist eines der Koppelelemente ein Dämpfungselement auf. Das Dämpfungselement kann passiv oder aktiv wirken. Das Dämpfungselement kann dazu ausgebildet sein, eine Schwingungsanregung in der Längsrichtung des Koppelelements zu dämpfen.

In einer Ausführungsform sind mehrere Lagerelemente und/oder Koppelelemente an einem Hilfsrahmen befestigt. Der Hilfsrahmen ist an der Grundplatte gelagert. Die Lagerung des Hilfsrahmens an der Grundplatte kann dazu ausgebildet sein, alle Freiheitsgrade des Hilfsrahmens relativ zu der Grundplatte zu sperren. Die Lagerung kann starr sein oder über Gelenke erfolgen. Die Lagerung kann ferner Dämpfungselemente aufweisen. Beispielsweise kann der Hilfsrahmen über ein elastisches Lagerelement an der Grundplatte befestigt sein. Das elastische Lagerelement kann als eine Elastomerlagerung, beispielsweise ein Gummidämpfer, ausgebildet sein.

In einer Ausführungsform sind das Lagergehäuse und das Koppelelement voneinander separat und aus verschiedenen Werkstoffen ausgebildet. Beispielsweise ist das Lagergehäuse aus einem metallischen Werkstoff, zum Beispiel eine Stahllegierung oder eine Aluminiumlegierung, ausgebildet. Beispielsweise ist das Koppelelement aus einem nicht-metallischen Werkstoff ausgebildet.

Ein zweiter Aspekt der vorliegenden Offenbarung betrifft eine Windkraftanlage mit der Lageranordnung gemäß dem ersten Aspekt. Die Windkraftanlage kann beispielsweise zur Stromerzeugung ausgebildet sein. Die Windkraftanlage weist einen Triebstrang, einen Turm und die Lageranordnung des ersten Aspekts auf. Die Lageranordnung ist an einer Spitze des Turms angebracht. Beispielsweise kann eine Grundplatte der Lageranordnung über ein Gierlager an der Spitze des Turms angebracht sein. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

In einer Ausführungsform überlappt ein Lagerelement der Lageranordnung eine spitzenseitige Wand des Turms in der Stützrichtung. Dadurch werden die Stützkräfte auf kurzem Weg und mit hoher Steifigkeit in den Turm eingeleitet. Somit wird mit einem einfachen Aufbau das Schwingungsverhalten des Turms verbessert.

In einer Ausführungsform weist der Triebstrang einen Rotor mit mindestens zwei Rotorblättern und einen Generator auf. Der Rotor ist über die Rotorwelle mit dem Generator mechanisch wirkverbunden. In einer Ausführungsform weist der Triebstrang ein Getriebe auf, das in einem Drehmomentfluss zwischen der Rotorwelle und dem Generator angeordnet ist.

### Kurze Beschreibung der Figuren

Fig. 1 veranschaulicht schematisch eine Windkraftanlage mit einem Triebstrang.
Fig. 2 veranschaulicht schematisch in einer frontalen Schnittansicht eine erste Ausführungsform einer Lageranordnung für den Triebstrang der Windkraftanlage von Fig. 1.
Fig. 3 veranschaulicht schematisch in einer frontalen Schnittansicht eine zweite Ausführungsform einer Lageranordnung für den Triebstrang der Windkraftanlage von Fig. 1.
Fig. 4 veranschaulicht schematisch in einer frontalen Schnittansicht eine dritte Ausführungsform einer Lageranordnung für den Triebstrang der Windkraftanlage von Fig. 1.
Fig. 5 veranschaulicht schematisch in einer frontalen Schnittansicht eine vierte Ausführungsform einer Lageranordnung für den Triebstrang der Windkraftanlage von Fig. 1.

### Detaillierte Beschreibung von Ausführungsformen

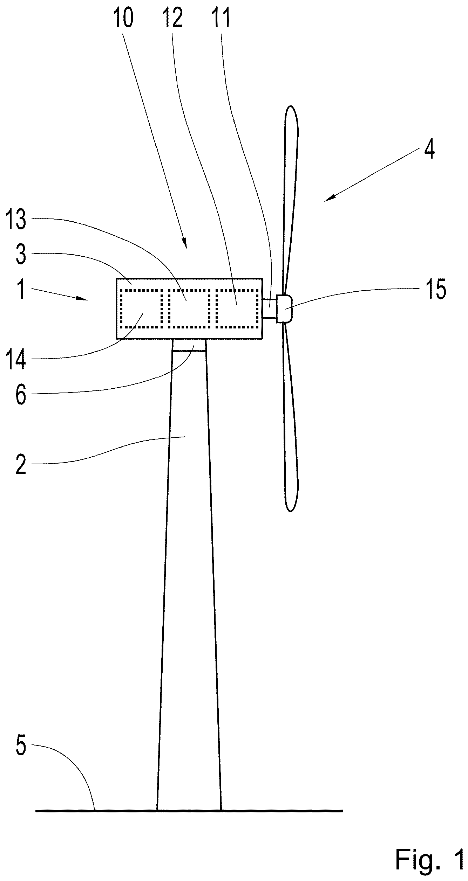

Fig. 1 veranschaulicht schematisch eine Windkraftanlage 1 in Horizontalbauweise. Die Windkraftanlage 1 weist eine Gondel 3 auf, welche über ein Gierlager 6 drehbar an einem oberen Ende eines Turms 2 befestigt ist. Ein unteres Ende des Turms 2 ist an einem Boden 5 verankert. In der Gondel 3 ist ein Triebstrang 10 aufgenommen, welcher eine Rotorwelle 11, ein Getriebe 12, einen Generator 13, Hilfsaggregate 14 und eine Nabe 15 aufweist. Ein Rotor 4 der Windkraftanlage 1 ist über die Nabe 15, die Rotorwelle 11 und das Getriebe 12 mit dem Generator 13 mechanisch wirkverbunden. Die Hilfsaggregate 14 können Einrichtungen zur Temperierung des Triebstrangs 10, Einrichtungen zum Wandeln von elektrischer Leistung, Einrichtungen zur Verstellung der Nabe 15 sowie Einrichtungen zum Ausrichten der Gondel 3 über das Gierlager 6 umfassen. Die Windkraftanlage 1 weist ferner eine Lageranordnung zum Lagern von Teilen des Triebstrangs 10 auf.

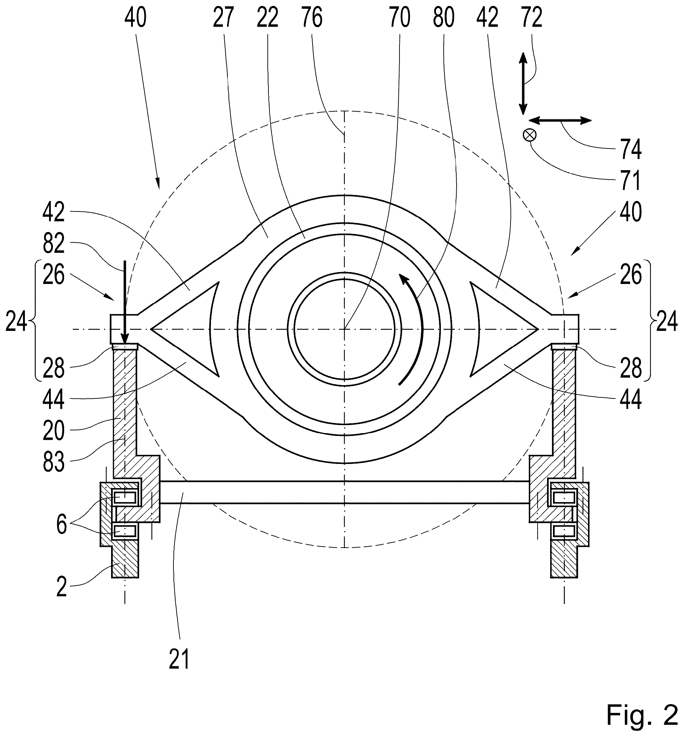

Fig. 2 veranschaulicht schematisch in einer frontalen Schnittansicht eine erste Ausführungsform einer Lageranordnung für den Triebstrang 10 der Windkraftanlage 1. Die Lageranordnung weist eine Grundplatte 20 auf, welche vorliegend als ein ringförmiges Bauteil ausgebildet ist. Die Grundplatte 20 ist über das Gierlager 6 mit dem Turm 2 drehbar verbunden. Innerhalb der Grundplatte 20 ist an einem unteren Ende eine Bodenplatte 21 bereitgestellt.

Die Lageranordnung weist ein Lagergehäuse 22 auf. Das Lagergehäuse 22 umschließt vorliegend Teile des Triebstrangs 10 und ist mit zumindest einem von dem Getriebe 12 und dem Generator 13 starr verbunden. Somit können das Getriebe 12 und/oder der Generator 13 Reaktionskräfte auf eine Krafteinleitung über die Rotorwelle 11 auf das Lagergehäuse 22 übertragen. Es ist zu beachten, dass weitere über die Rotorwelle 11 eingeleitete Reaktionskräfte, beispielsweise radiale Kräfte, an einem nicht dargestellten Rotorwellenhauptlager, welches als weitere Lageranordnung fungiert, abgestützt werden können.

Die Lageranordnung weist vorliegend zwei Koppeleinrichtungen 24 auf. Jede Koppeleinrichtung 24 weist ein Koppelelement 26 und ein Lagerelement 28 auf. Bei der vorliegenden Ausführungsform sind zwei Koppeleinrichtungen 24 mit je einem Koppelelement 26 und einem Lagerelement 28 auf gegenüberliegenden Seiten einer Torsionsmomentachse 70 angeordnet. Die Torsionsmomentachse 70 entspricht im Wesentlichen einer Rotationsachse der Rotorwelle 11. In Fig. 2 ist die Torsionsmomentachse 70 als ein Kreuz innerhalb des Lagergehäuses 22 gekennzeichnet. Die zwei Koppeleinrichtungen 24 sind identisch aufgebaut und lediglich um die Torsionsmomentachse 70 horizontal gespiegelt. Daher wird zur Vereinfachung der Beschreibung im Folgenden nur eine der Koppeleinrichtungen 24 beschrieben, nämlich die linke in Fig. 2. Die Zusammenhänge gelten analog für die rechte Koppeleinrichtung 24 in Fig. 2, wenn die Richtung eines später beschriebenen Torsionsmoments 80 umgekehrt wird.

Die Koppeleinrichtung 24 weist vorliegend eine Gehäuseanbindung 27 auf, welche das Lagergehäuse 22 mindestens teilweise umschließt und mit diesem gekoppelt ist, um alle Reaktionskräfte von dem Lagergehäuse 22 aufzunehmen. Das Koppelelement 26 der Koppeleinrichtung 24 ist vorliegend als ein Dreieckslenker 40 ausgebildet. Der Dreieckslenker 40 weist eine dreieckige Form auf, welche durch einen Teil der Gehäuseanbindung 27 sowie durch zwei Schenkel 42, 44 ausgebildet wird. Die Schenkel 42, 44 sind vorliegend als starre gerade Arme, welche auf der Seite der Gehäuseanbindung 27 voneinander beabstandet sind und zu dem Lagerelement 28 hin aufeinander zulaufen, ausgebildet.

Das Koppelelement 26 der Koppeleinrichtung 24 ist dazu ausgebildet, das Torsionsmoment 80 um die Torsionsmomentachse 70 in eine Stützkraft 82 umzuwandeln, welche in einer Stützrichtung 72 wirkt. Demnach ist das Koppelelement 26 funktionell als eine Drehmomentstütze ausgebildet. Die Stützkraft 82 wird über das Lagerelement 28 in die Grundplatte 20 eingeleitet. Die Stützkraft 82 ist auf der linken Seite der Fig. 2 durch einen Pfeil veranschaulicht, eine Wirklinie 83 der Stützkraft 82 ist durch eine Strichzweipunktlinie veranschaulicht. Das Lagerelement 28 ist vorliegend dazu ausgebildet, Verschiebungen des Koppelelements 26 und somit des Lagergehäuses 22 in einer Querrichtung 74 relativ zu der Grundplatte 20 zuzulassen. Die Querrichtung 74 ist senkrecht sowohl zu der Torsionsmomentachse 70 als auch zu der Stützrichtung 72. Eine Richtung 71 der Torsionsmomentachse 70, die Stützrichtung 72 und die Querrichtung 74 sind oben rechts in Fig. 2 als Richtungspfeile eingezeichnet. Das Lagerelement 28 ist vorliegend als ein ebenes Gleitelement ausgebildet, welches Kräfte in der Stützrichtung 72 sowie Kräfte in Richtung der Torsionsmomentachse 70 überträgt, jedoch Kräfte in der Querrichtung 74 nicht überträgt. Vorliegend werden Kräfte in der Stützrichtung 72 durch das Lagerelement 28 nur einseitig, nämlich nach unten, übertragen.

Das Torsionsmoment 80 wird von dem Triebstrang auf das Lagergehäuse 22 aufgebracht. Das Lagergehäuse 22 ist vorliegend mit der Gehäuseanbindung 27 mechanisch gekoppelt. Durch den Aufbau des Koppelelements 26 ist das Lagerelement 28 von der Torsionsmomentachse 70 beabstandet. Daher dient das Koppelelement 26 als ein Hebelarm für das auf das Lagergehäuse 22 aufgebrachte Torsionsmoment 80. Durch diesen Hebelarm wird das Torsionsmoment 80 in die Stützkraft 82 umgewandelt, welche über das Lagerelement 28 in die Grundplatte 20 eingeleitet wird. Zudem ist bei der vorliegenden Ausführungsform das Lagerelement 28 von einer Gierachse 76 beabstandet und auch dazu ausgebildet, Kräfte in Richtung der Torsionsmomentachse 70, die im Wesentlichen einer Umfangsrichtung um die Gierachse 76 in der Schnittebene von Fig. 2 entspricht, aufzunehmen. Dadurch ist das Lagerelement 28 bei der vorliegenden Ausführungsform auch in der Lage, ein Giermoment um die Gierachse 76 abzustützen. Hingegen werden Verschiebungen in der Querrichtung 74 durch das Lagerelement 28 zugelassen, so dass Schwingungen und Kräfte in der Querrichtung 74 nicht in die Grundplatte 20 eingeleitet werden.

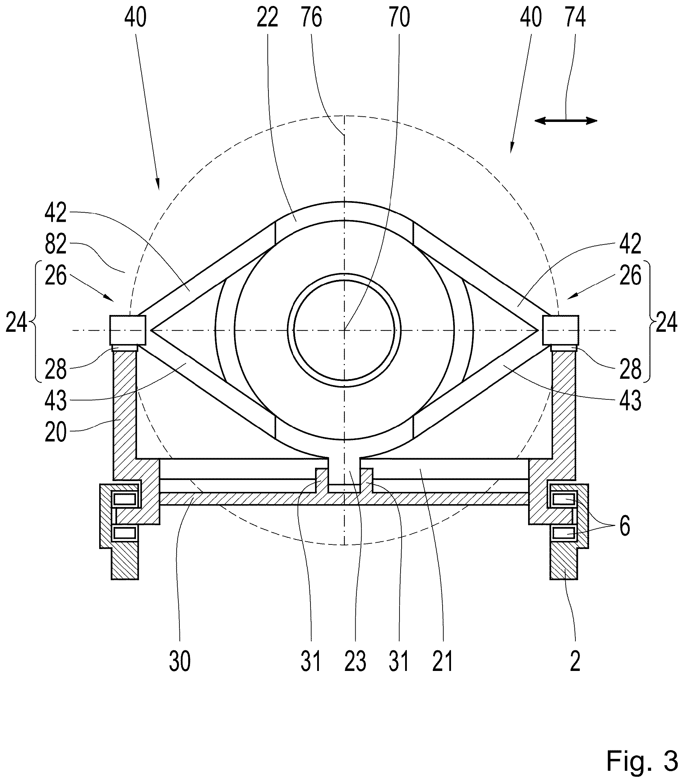

Fig. 3 veranschaulicht schematisch in einer frontalen Schnittansicht eine zweite Ausführungsform einer Lageranordnung für den Triebstrang 10 der Windkraftanlage 1. Es werden lediglich Unterschiede zu der ersten Ausführungsform von Fig. 2 erläutert. Bei der zweiten Ausführungsform ist das Lagerelement 28 dazu ausgebildet, Verschiebungen in der umfänglichen Richtung um die Gierachse 76 zuzulassen. Dadurch ist das Lagerelement 28 der zweiten Ausführungsform nicht dazu ausgebildet, das Giermoment um die Gierachse 76 abzustützen. Um das Giermoment um die Gierachse 76 abzustützen, ist bei der zweiten Ausführungsform ein weiteres Koppelelement 30 vorgesehen. Das weitere Koppelelement 30 ist vorliegend als eine starre Querstrebe ausgebildet.

Das weitere Koppelelement 30 ist an der Grundplatte 20 befestigt und erstreckt sich in der Querrichtung 74. Das weitere Koppelelement 30 ist mit Bezug auf die Gierachse 76 entlang der Torsionsmomentachse 70 versetzt und somit von der Gierachse 76 beabstandet. Das weitere Koppelelement 30 weist zwei Verbindungsabschnitte 31 auf, welche mit einem Verbindungselement 23 verbunden sind. Das Verbindungselement 23 ist mit dem Lagergehäuse 22 zur Krafteinleitung fest verbunden. Das Verbindungselement 23 und die Verbindungsabschnitte 31 sind zur Kraftübertragung in der Querrichtung 74 ausgebildet. Da das weitere Koppelelement 30 von der Gierachse 76 beabstandet ist, wandelt seine Anbindung an das Lagergehäuse 22 über die Verbindungsabschnitte 31 und das Verbindungselement 23 ein auf das Lagergehäuse 22 wirkendes Giermoment um die Gierachse 76 in eine Querkraft 84 um, welche in das weitere Koppelelement 30 eingeleitet wird. Da das weitere Koppelelement 30 an der Grundplatte 20 befestigt ist, ist die Lageranordnung des zweiten Ausführungsbeispiels in der Lage, das Giermoment um die Gierachse 76 separat von der Abstützung des Torsionsmoments 80 abzustützen.

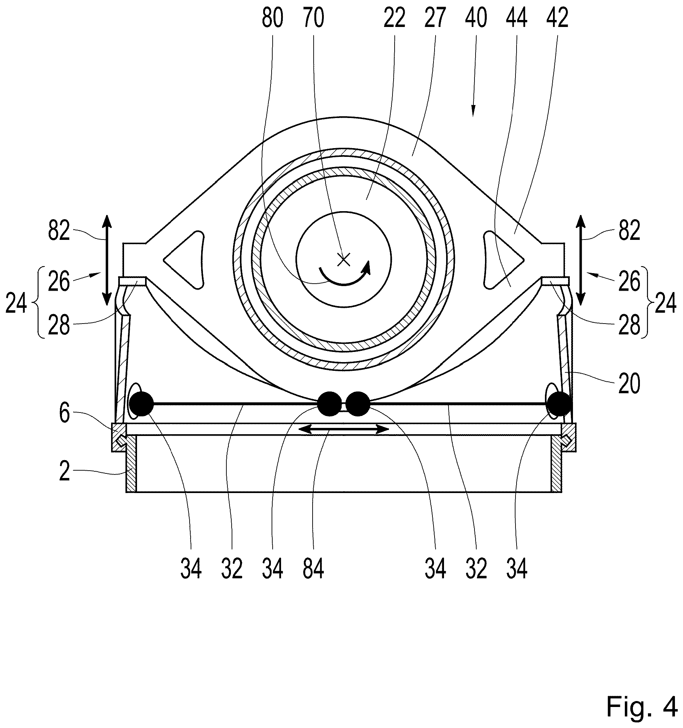

Fig. 4 veranschaulicht schematisch in einer frontalen Schnittansicht eine dritte Ausführungsform einer Lageranordnung für den Triebstrang 10 der Windkraftanlage 1. Es werden lediglich Unterschiede zu der zweiten Ausführungsform erläutert. Während bei der zweiten Ausführungsform Querkräfte durch ein starres weiteres Koppelelement 30 übertragen werden, werden bei der dritten Ausführungsform Querkräfte über zwei weitere Koppelelemente 32 übertragen. Die weiteren Koppelelemente 32 sind jeweils als Stablenker ausgebildet. Jedes als Stablenker ausgebildete weitere Koppelelement 32 weist an jedem seiner zwei Enden ein Gelenk 34 auf. Die Gelenke 34 sind als Kugelgelenke ausgeführt, welche alle Rotationen als freie Freiheitsgrade aufweisen. Die weiteren Koppelelemente 32 verlaufen in etwa parallel zu der Querrichtung 84. Zudem sind die weiteren Koppelelemente 32 von der Gierachse 70 beabstandet. Somit sind die weiteren Koppelelemente 32 in der Lage, Querkräfte und Giermomente des Triebstrangs 10 und des Lagergehäuses 22 abzustützen.

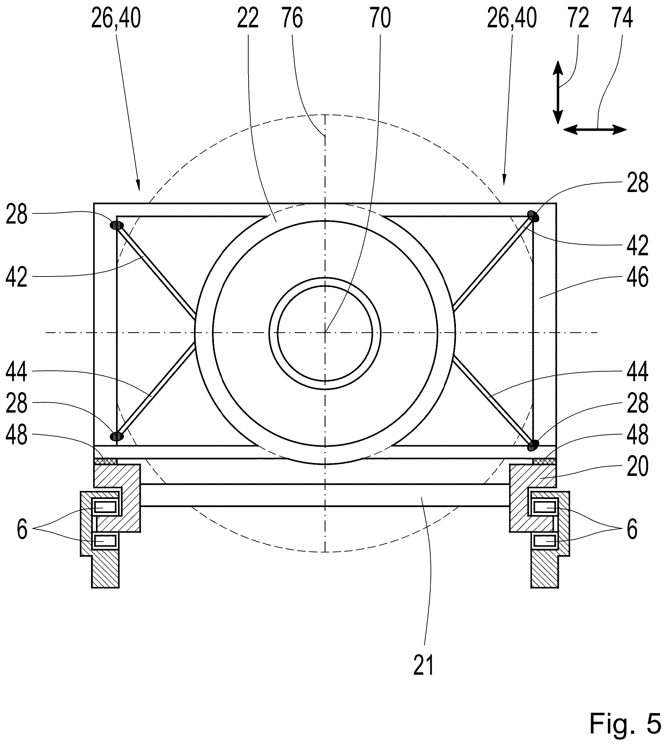

Fig. 5 veranschaulicht schematisch in einer frontalen Schnittansicht eine vierte Ausführungsform einer Lageranordnung für den Triebstrang 10 der Windkraftanlage 1. Es werden lediglich Unterschiede zu der ersten Ausführungsform von Fig. 2 erläutert. Die Koppelelemente 26 der vierten Ausführungsform sind im Vergleich zu den Koppelelementen 26 der ersten Ausführungsform nicht unmittelbar an der Grundplatte 20 gelagert, sondern an einem Hilfsrahmen 46. Der Hilfsrahmen 46 ist über elastische Lagerelemente 48 an der Grundplatte 20 gelagert. Die elastischen Lagerelemente 48 erlauben geringfügige Bewegungen des Hilfsrahmens 46 in Richtungen senkrecht zu der Stützrichtung 72 und weisen einen hohen Dämpfungsgrad auf. Das Lagergehäuse 22 ist über zwei Koppelelemente 26 in dem Hilfsrahmen 46 gelagert. Die Koppelelemente 26 sind vorliegend als Dreieckslenker 40 ausgebildet. Jeder Dreieckslenker 40 ist durch zwei Schenkel 42, 44 sowie durch einen Teil des Hilfsrahmens 46 ausgebildet. Die Schenkel 42, 44 sind jeweils über Lagerelemente 28 an dem Rahmen 46 gelagert. An ihrem anderen Ende sind die Schenkel 42, 44 starr mit dem Lagergehäuse 22 verbunden. Die Schenkel 42, 44 sind vorliegend als Stablenker ausgebildet, welche Verschiebungen des Lagergehäuses 22 in der Querrichtung 74 zulassen. Genauer gesagt sind die Schenkel 42, 44 in der Lage, unter Einwirkung von Kräften in der Querrichtung 74 ihre Länge zu ändern. Vorliegend wird diese Längenänderung durch die Struktur der Schenkel 42, 44 passiv gedämpft. In einer weiteren Ausführungsform weisen die Schenkel 42, 44 aktive Dämpfungsstrukturen auf. Durch die vorstehend beschriebene Struktur der Dreieckslenker 40 der Koppelelemente 26 wird bei der vierten Ausführungsform im Wesentlichen eine Doppelquerlenkerstruktur bereitgestellt. Diese ermöglicht eine Aufnahme des Torsionsmoments 80 mit einer hohen Steifigkeit, während Verschiebungen des Lagergehäuses 22 in der Querrichtung relativ zu dem Hilfsrahmen 46 und der Grundplatte 20 ermöglicht werden. Diese Verschiebungen werden durch die Schenkel 42, 44 stark gedämpft. Zudem ist der Rahmen 46 über die dämpfenden elastischen Lagerelemente 48 an der Grundplatte 20 gelagert. Nach alldem weist die Lageranordnung der vierten Ausführungsform besonders günstige Schwingungseigenschaften auf.

### Bezugszeichen

- 1: Windkraftanlage
- 2: Turm
- 3: Gondel
- 4: Rotor
- 5: Boden
- 6: Gierlager
- 10: Triebstrang
- 11: Rotorwelle
- 12: Getriebe
- 13: Generator
- 14: Hilfsaggregate
- 15: Nabe
- 20: Grundplatte
- 21: Bodenplatte
- 22: Lagergehäuse
- 23: Verbindungselement
- 24: Koppeleinrichtung
- 26: Koppelelement
- 27: Gehäuseanbindung
- 28: Lagerelement
- 30, 32: weiteres Koppelelement
- 31: Verbindungsabschnitt
- 34: Gelenk
- 40: Dreieckslenker
- 42, 44: Schenkel
- 46: Hilfsrahmen
- 48: elastisches Lagerelement
- 70: Torsionsmomentachse
- 71: Richtung der Torsionsmomentachse
- 72: Stützrichtung
- 74: Querrichtung
- 76: Gierachse
- 80: Torsionsmoment
- 82: Stützkraft
- 83: Wirklinie
- 84: Querkraft

## Patentansprüche

1. Lageranordnung für eine Windkraftanlage (1) zum Lagern eines Triebstrangs (10) an einem Turm (2) der Windkraftanlage (1), mit einer Grundplatte (20), welche an dem Turm (2) anbringbar ist, einem Lagergehäuse (22) zum Aufnehmen und Lagern des Triebstrangs (10), und einer Koppeleinrichtung (24), welche ein Koppelelement (26) zum Umwandeln eines Torsionsmoments (80) um eine Torsionsmomentachse (70), welches von dem Triebstrang (10) auf das Lagergehäuse (22) aufgebracht wird, in eine in einer Stützrichtung (72) wirkende Stützkraft (82) und ein Lagerelement (28) zum Einleiten der Stützkraft (82) von dem Koppelelement (26) in die Grundplatte (20) aufweist, wobei die Koppeleinrichtung (24) ausgebildet ist, Verschiebungen des Lagergehäuses (22) in einer Querrichtung (74), welche senkrecht zu der Torsionsmomentachse (70) und der Stützrichtung (72) ist, relativ zu der Grundplatte (20) zuzulassen.

2. Lageranordnung nach Anspruch 1, **dadurch gekennzeichnet, dass** das Lagerelement (28) als ein Gleitelement zum Ermöglichen von Verschiebungen des Lagergehäuses (22) in der Querrichtung (74) relativ zu der Grundplatte (20) ausgebildet ist.

3. Lageranordnung nach Anspruch 1 oder 2, **dadurch gekennzeichnet, dass** die Lageranordnung zwei Koppeleinrichtungen (24) aufweist, welche auf gegenüberliegenden Seiten der Torsionsmomentachse (70) angeordnet sind.

4. Lageranordnung nach einem der vorangehenden Ansprüche, **dadurch gekennzeichnet, dass** die Lageranordnung ein weiteres Koppelelement (30; 32) zum Übertragen von Kräften in der Querrichtung (74) von dem Lagergehäuse (22) auf die Grundplatte (20) aufweist.

5. Lageranordnung nach einem der vorangehenden Ansprüche, **dadurch gekennzeichnet, dass** das Lagerelement (28) dazu ausgebildet ist, Kräfte in Richtung der Torsionsmomentachse (70) aufzunehmen.

6. Lageranordnung nach einem der Ansprüche 1 bis 4, **dadurch gekennzeichnet, dass** die Grundplatte (20) um eine Gierachse (76) drehbar an dem Turm (2) gelagert ist, das Lagerelement (28) ausgebildet ist, Verschiebungen in einer umfänglichen Richtung um die Gierachse (76) zuzulassen, und die Lageranordnung ein weiteres Koppelelement (30; 32) zum Umwandeln eines Giermoments um die Gierachse (76) an dem Lagergehäuse (22) in eine Kraft in der Querrichtung (74) aufweist, und das weitere Koppelelement (30; 32) zum Umwandeln des Giermoments ferner zum Einleiten der Kraft in der Querrichtung (74) in die Grundplatte (20) ausgebildet ist.

7. Lageranordnung nach einem der vorangehenden Ansprüche, **dadurch gekennzeichnet, dass** eines der Koppelelemente (26; 30; 32) einen Stablenker aufweist, welcher ausgebildet ist, Zug- und Druckkräfte zu übertragen und welcher an seinen zwei Enden drehbar gelagert ist.

8. Lageranordnung nach einem der vorangehenden Ansprüche, **dadurch gekennzeichnet, dass** eines der Koppelelemente (26; 30; 32) als ein Dreieckslenker (40) ausgebildet ist.

9. Lageranordnung nach Anspruch 8, **dadurch gekennzeichnet, dass** eines der Koppelelemente (26; 30; 32) ein Dämpfungselement aufweist.

10. Windkraftanlage (1) mit einem Triebstrang (10), einem Turm (2) und einer Lageranordnung nach einem der vorangehenden Ansprüche, welche an einer Spitze des Turms (2) angebracht ist.

11. Windkraftanlage (1) nach Anspruch 10, wobei ein Lagerelement (28) der Lageranordnung eine spitzenseitige Wand des Turms (2) in der Stützrichtung (74) überlappt.
